# EUROPÄISCHE PATENTSCHRIFT

(11) **EP 1 840 530 B1**
(45) Veröffentlichungstag und Bekanntmachung des Hinweises auf die Patenterteilung: **09.03.2016**
(21) Anmeldenummer: 06024860.6
(22) Anmeldetag: 01.12.2006
(51) Int. Cl.: G01F 1/66

(54) **Ultraschalldurchflussmessgerät**
Ultrasound flow measuring device
Débitmètre à ultrasons

(30) Priorität: 30.03.2006 DE 102006015218
(43) Veröffentlichungstag der Anmeldung: 03.10.2007
(73) Patentinhaber: Krohne AG, 4019 Basel (CH)
(72) Erfinder: Molenaar, Marcel Meijlom, 3311ZG Dordrecht (NL); Pors, Jan Teunis Aart, 3262EK, Oud-Beijerland (NL); Huijzer, Arie, 3363BS, Sliedrecht (NL)
(74) Vertreter: Gesthuysen Patent- und Rechtsanwälte

(56) Entgegenhaltungen:
- DE-A1- 4 124 692
- DE-A1- 10 216 037
- DE-U1- 29 611 678

## Beschreibung

Die Erfindung betrifft ein Ultraschalldurchflußmeßgerät, insbesondere Clamp-on-Ultraschalldurchflußmeßgerät, zur Messung des Durchflusses durch eine von einem Medium durchströmte Leitung, mit wenigstens einem ein Piezo-Element aufweisenden Ultraschallwandler, wobei ein Anschlußelement zur Anbringung des Ultraschallwandlers an der Leitung vorgesehen ist und das Piezo-Element auf dem Anschlußelement befestigt ist und zwischen dem Piezo-Element und dem Anschlußelement eine Zwischenplatte vorgesehen ist, wobei das Piezo-Element mittels der Zwischenplatte an dem Anschlußelement befestigt ist, wobei die Zwischenplatte als ein elektrischer Anschluß für das Piezo-Element dient.

Clamp-on-Ultraschalldurchflußmeßgeräte zeichnen sich dadurch aus, daß sie besonders einfach eingesetzt werden können: Im Gegensatz zu anderen Ultraschalldurchflußmeßgeräten, die in bestehende Rohrleitungssysteme fest integriert werden müssen, indem sie ein Stück der Rohrleitung ersetzen, können Clamp-on-Durchflußmeßgeräte einfach von außen auf einen geeigneten Leitungsabschnitt des Rohrleitungssystems aufgesetzt werden. Dieser Leitungsabschnitt, an dem das Clamp-on-Ultraschalldurchflußmeßgerät angebracht ist, wird damit quasi zur Meßleitung, ohne daß es einer eigenen separaten Meßleitung bedarf, die in das Rohrleitungssystem aufwendig eingesetzt werden muß. Dies macht die Verwendung von Clamp-on-Ultraschalldurchflußmeßgeräten einfach und kostengünstig.

Bei Clamp-on-Ultraschalldurchflußmeßgeräten, wie auch bei anderen Ultraschalldurchflußmeßgeräten, ist jedoch häufig problematisch, daß die erzielbaren Signale nur sehr gering sind. Dies ist z. B. auf geringe Betriebsspannungen aufgrund von eigensicher ausgebildeten Stromkreisen zurückzuführen. Darüber hinaus wird das Signal-zu-Rausch-Verhältnis auch durch nicht angepaßte akustische Übergänge zwischen unterschiedlichen Materialien verschlechtert. Schließlich kommt es auch auf dem Signalweg zu Signalverlusten aufgrund von Dämpfungseffekten in dem jeweiligen Medium. Damit ist häufig ein nur sehr geringes Meßsignal verbunden, das von einem empfangenden Ultraschallwandler ausgegeben wird. Ein solches geringes Meßsignal ist nun insbesondere hinsichtlich elektromagnetischer Störungen stark anfällig.

Aus der DE 41 24 692 A1 ist ein Ultraschallmesskopf für die Aufklemmung auf eine Rohraußenwand zur Clamp-on-Durchflussmessung bekannt. Allgemeiner sind aus der DE 296 11 678 U1 Schallwandler, insbesondere Ultraschallwandler für die Prozessmesstechnik, zum Beispiel für die Ultraschall-Durchflussmessung oder die Niveaumessung, bekannt. Aus der der DE 102 16 037 A1 sind ebenfalls Schall- und Ultraschallsensoren zur Niveaumessung bekannt.

Es ist die Aufgabe der Erfindung, ein derartiges Ultraschalldurchflußmeßgerät, insbesondere ein Clamp-on-Ultraschalldurchflußmeßgerät, anzugeben, das ein gutes Signal-zu-Rausch-Verhältnis liefert.

Diese Aufgabe ist bei dem eingangs beschriebenen Ultraschalldurchflußmeßgerät dadurch gelöst, daß die Zwischenplatte wenigstens eine Ausnehmung aufweist, in der eine Klebemittelschicht zur Befestigung des Piezo-Elements an dem Anschlußelement vorgesehen ist, dass die Dicke der Klebemittelschicht der Dicke der Zwischenplatte entspricht, dass der Meßwandler mit einer vorbestimmten Ultraschallfrequenz betrieben wird und dass die Dicke der Zwischenplatte einem Viertel der Ultraschallwellenlänge in der Klebeschicht bei der vorbestimmten Ultraschallfrequenz entspricht.

Grundsätzlich kann die Zwischenplatte unterschiedlichen Geometrien folgen. Gemäß einer bevorzugten Weiterbildung der Erfindung ist jedoch vorgesehen, daß die Oberseite und die Unterseite der Zwischenplatte parallel zueinander verlaufen. Auf diese Weise werden die durch die Zwischenplatte laufenden Ultraschallsignale den geringstmöglichen Beeinflussungen durch die Geometrie der Zwischenplatte unterworfen.

Die Zwischenplatte kann als ein elektrischer Anschluss für das Piezo-Element dienen, indem die Zwischenplatte mit einem metallischen Anteil in direktem physikalischen, galvanisch leitenden Kontakt mit dem Piezo-Element steht. Insbesondere ist in diesem Zusammenhang vorgesehen, daß das Piezo-Element plan auf der Zwischenplatte bzw. Teilen der Zwischenplatte aufliegt.

Das Piezo-Element ist mittels der Zwischenplatte an dem Anschlusselement befestigt, indem die Zwischenplatte wenigstens eine Ausnehmung aufweist, in der eine Klebemittelschicht zur Befestigung des Piezo-Elements an dem Anschlusselement vorgesehen ist. Das heißt mit anderen Worten, daß das Piezo-Element auf das Anschlußelement aufgeklebt ist, nämlich mittels der in der Ausnehmung der Zwischenplatte vorgesehenen Klebemittelschicht.

Dadurch, dass der Meßwandler zum Betrieb mit einer vorbestimmten Ultraschallfrequenz vorgesehen ist und die Dicke der Zwischenplatte einem Viertel der Ultraschallwellenlänge in der Klebeschicht bei der vorbestimmten Ultraschallfrequenz entspricht, wird eine optimale Anpassung erzielt, die die geringsten Verluste gewährleistet. Für die Klebemittelschicht kann ein elektrisch leitfähiger Kleber vorgesehen sein, so daß die elektrische Kontaktierung des Piezo-Elements nicht zwingend über die Zwischenplatte erfolgen muß.

Gemäß einer bevorzugten Weiterbildung der Erfindung ist vorgesehen, daß der Ultraschallwandler innerhalb einer elektromagnetischen Abschirmeinrichtung vorgesehen ist.

Insofern ist also vorgesehen, daß Maßnahmen getroffen werden, die gewährleisten, daß der Ultraschallwandler keinen elektromagnetischen Störungen ausgesetzt wird. Können in die Leitungen und Bauteile, wie elektronische Bauteile, des Ultraschallwandlers keine elektromagnetischen Störungen einkoppeln, so ist es möglich, z. B. mittels einer abgeschirmten Leitung, das von einem empfangenden Ultraschallwandler ausgegebene Signal zumindest im wesentlichen frei von äußeren Störungen auszukoppeln.

Grundsätzlich sind im Rahmen der Erfindung unterschiedliche Abschirmeinrichtungen möglich. Gemäß einer bevorzugten Weiterbildung der Erfindung ist jedoch vorgesehen, daß die Abschirmeinrichtung von einem metallischen oder zumindest metallisch beschichteten Gehäuse gebildet wird. Gemäß einer bevorzugten Weiterbildung der Erfindung ist ferner vorgesehen, daß zum elektrischen Anschluß des Ultraschallwandlers ein Kabel mit einer Abschirmung vorgesehen ist und die Abschirmung des Kabels mit der Abschirmeinrichtung galvanisch leitend verbunden ist. Damit wird der zuvor schon geschilderte Vorteil erzielt, daß das von dem Ultraschallwandler ausgegebene Meßsignal quasi frei von äußeren Störungen ausgegeben werden kann.

Die Zwischenplatte kann Bestandteil der elektromagnetischen Abschirmeinrichtung für den Ultraschallwandler sein. In diesem Fall, aber auch ansonsten ist gemäß einer bevorzugten Weiterbildung der Erfindung vorgesehen, daß die Zwischenplatte zumindest auf der dem Piezo-Element zugewandten Seite, vorzugsweise vollständig, metallisch ist. Eine solche metallische Ausbildung der Zwischenplatte ist auch für die zuvor beschriebene Funktion der Zwischenplatte als elektrischer Anschluß für das Piezo-Element erforderlich.

Der elektrische Anschluß des Piezo-Elements auf seiner der Zwischenplatte gegenüberliegenden Seite kann auf verschiedene weisen ausgebildet sein. Gemäß einer bevorzugten Weiterbildung der Erfindung ist jedoch vorgesehen, daß das Piezo-Element auf seiner der Zwischenplatte gegenüberliegenden Seite als elektrischen Anschluß eine auf dem Piezo-Element anliegende Anschlußfeder aufweist. Damit wird eine besonders einfache und verläßliche elektrische Kontaktierung des Piezo-Elements erzielt.

Grundsätzlich kann das Piezo-Element frei auf dem Anschlußelement befestigt sein. Gemäß einer bevorzugten Weiterbildung der Erfindung ist jedoch vorgesehen, daß das Anschlußelement Positionierungseinrichtungen für das Piezo-Element aufweist. Insbesondere kann in diesem Zusammenhang vorgesehen sein, daß das Anschlußelement als Positionierungseinrichtungen von dem Anschlußelement hervorstehende Wände oder Stifte aufweist, innerhalb derer ein genau definierter Positionierungsort für das Piezo-Element bestimmt ist.

Schließlich kann das Anschlußelement aus unterschiedlichen Materialien gefertigt sein und unterschiedlichen Geometrien folgen. Gemäß einer bevorzugten Weiterbildung der Erfindung ist jedoch vorgesehen, daß als Anschlußelement ein, vorzugsweise aus Kunststoff gefertigter, Keil vorgesehen ist.

Nachfolgend wird ein bevorzugtes Ausführungsbeispiel der Erfindung unter Bezugnahme auf die Zeichnung im einzelnen beschrieben. In der Zeichnung zeigt
- Fig. 1: die gesamte Ultraschallwandlereinrichtung eines Ultraschalldurchflußmeßgeräts gemäß einem bevorzugten Ausführungsbeispiel der Erfindung in einer Explosionsdarstellung,
- Fig. 2: einen ersten Schnitt der Ultraschallwandlereinrichtung des Ultraschalldurchflußmeßgeräts gemäß dem bevorzugten Ausführungsbeispiel der Erfindung und
- Fig. 3: einen zweiten Schnitt der Ultraschallwandlereinrichtung des Ultraschalldurchflußmeßgeräts gemäß dem bevorzugten Ausführungsbeispiel der Erfindung.

Im folgenden wird für ein Ultraschalldurchflußmeßgerät gemäß einem bevorzugten Ausführungsbeispiel der Erfindung der vorliegend relevante Teil, nämlich die gesamte Ultraschallwandlereinrichtung einschließlich Anschlußelement und Gehäuse beschrieben.

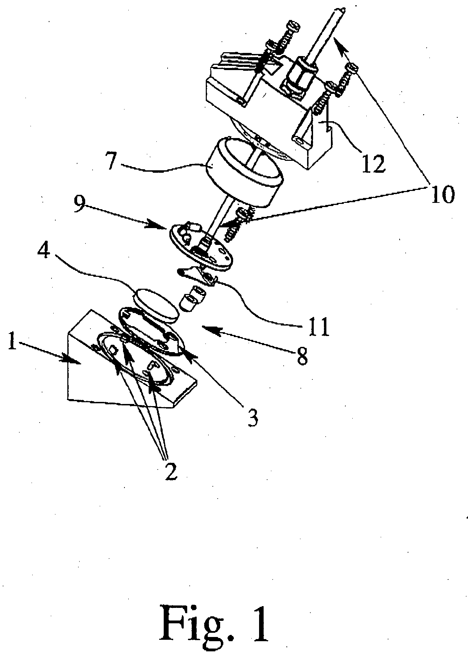

Alle Bestandteile dieser Ultraschallwandlereinheit sind aus der Explosionsdarstellung in Fig. 1 ersichtlich: Die Ultraschallwandlereinheit weist ein Anschlußelement 1 in Form eines Kunststoffkeils auf, über den der eigentliche Anschluß der Ultraschallwandlereinheit an die nicht weiter dargestellte Leitung erfolgt, durch die das Medium strömt, dessen Durchfluß gemessen werden soll. Das Anschlußelement 1 weist Positionierungseinrichtungen 2 in Form von hervorstehenden Wandabschnitten auf, die als Positionierungshilfe für eine metallische Zwischenplatte 3 und ein Piezo-Element 4 dienen.

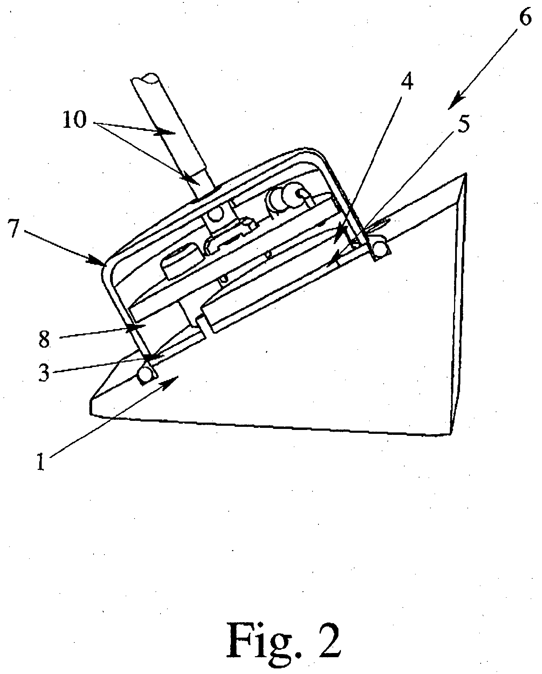

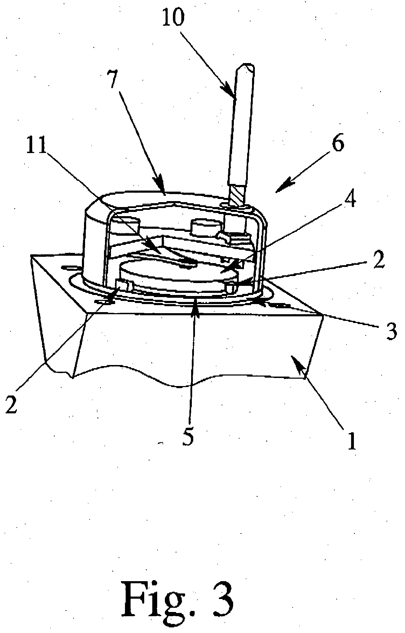

Die Zwischenplatte 3 weist in ihrem Innenbereich eine Öffnung auf, so daß bei auf dem Anschlußelement 1 aufliegender Zwischenplatte 3 sich ein Raum ergibt, der mit einer Klebemittelschicht 5 gefüllt werden kann, wie z. B. aus den Fig. 2 und 3 ersichtlich. Bei der Klebemittelschicht 5 kann es sich z. B. um einen ein- oder zweikomponentigen elektrisch leitfähigen Epoxidkleber handeln. Wie insbesondere auch aus den Fig. 2 und 3 ersichtlich, ist die Zwischenplatte 3 derart ausgebildet, daß das Piezo-Element 4 nicht nur auf der Klebemittelschicht 5 aufliegt, sondern auch auf Teilen der Zwischenplatte 3.

Bei dem vorliegend beschriebenen bevorzugten Ausführungsbeispiel der Erfindung ist nun zur Abschirmung von elektromagnetischen Störungen eine elektromagnetische Abschirmeinrichtung 6 vorgesehen, die sich zusammensetzt aus der Zwischenplatte 3 und einem Gehäuse 7 aus Metall. Das Gehäuse 7 liegt auf der Zwischenplatte 3 auf, so daß sich ein geschlossener, abgeschirmter Raum ergibt, innerhalb dessen der Ultraschallwandler 8 einschließlich des Piezo-Elements 4 sowie weitere elektronische Einrichtungen 9 vorgesehen sind.

Für den elektrischen Anschluß des Piezo-Elements 4 ist nun folgendes vorgesehen: Der elektrische Anschluß der Ultraschallwandlereinheit erfolgt über ein Koaxialkabel 10 dessen Abschirmung mit der elektromagnetischen Abschirmeinrichtung 6, nämlich dem Gehäuse 7 verbunden ist, und dessen Seele auf eine Anschlußfeder 11 geführt ist, die auf der der Zwischenplatte 3 gegenüberliegenden Seite des Piezo-Elements 4 vorgesehen ist. Dadurch, daß das Piezo-Element 4 auf der Zwischenplatte 3 in galvanisch leitender Weise aufliegt und die Abschirmung des Koaxialkabels 10 mit dem auf der Zwischenplatte 3 aufliegendem Gehäuse 7 verbunden ist, erfolgt eine Erdung des Piezo-Elements auf der der Anschlußfeder 11 gegenüberliegenden Seite.

Geschützt werden die gesamten Bauteile schließlich durch ein Plastikgehäuse 12, das auf das Anschlußelement 1 aufgeschraubt wird. Insgesamt wird damit erreicht, daß das von dem Ultraschallwandler 8 ausgegebene Meßsignal quasi frei von äußeren Störungen ausgegeben werden kann.

Wesentlich ist dabei auch, daß die Dicke der Klebemittelschicht 5 der Dicke der Zwischenplatte 3 entspricht. Dabei ist die Meßwandlereinrichtung zum Betrieb mit einer vorbestimmten Ultraschallfrequenz vorgesehen, so daß die Dicke der Zwischenplatte 3 derart gewählt werden kann, daß sie einem Viertel der Ultraschallwellenlänge in der Klebemittelschicht 5 bei der vorbestimmten Ultraschallfrequenz entspricht. Damit wird der Vorteil einer optimalen Anpassung des Übergangs der Ultraschallsignale von dem Piezo-Element 4 auf das Anschlußelement 11 erzielt.

## Patentansprüche

1. Ultraschalldurchflußmeßgerät, insbesondere Clamp-on-Ultraschalldurchflußmeßgerät, zur Messung des Durchflusses durch eine von einem Medium durchströmte Leitung, mit wenigstens einem ein Piezo-Element (4) aufweisenden Ultraschallwandler (8), wobei ein Anschlußelement (1) zur Anbringung des Ultraschallwandlers (8) an der Leitung vorhanden ist und das Piezo-Element (4) auf dem Anschlußelement (1) befestigt ist und zwischen dem Piezo-Element (4) und dem Anschlußelement (1) eine Zwischenplatte (3) vorhanden ist, wobei das Piezo-Element (4) mittels der Zwischenplatte (3) an dem Anschlußelement (1) befestigt ist, wobei die Zwischenplatte (3) als ein elektrischer Anschluß für das Piezo-Element (4) dient,
**dadurch gekennzeichnet,**
**dass** die Zwischenplatte (3) wenigstens eine Ausnehmung aufweist, in der eine Klebemittelschicht (5) zur Befestigung des Piezo-Elements (4) an dem Anschlußelement (1) vorhanden ist, dass die Dicke der Klebemittelschicht (5) der Dicke der Zwischenplatte (3) entspricht, dass der Meßwandler (8) mit einer vorbestimmten Ultraschallfrequenz betrieben wird und dass die Dicke der Zwischenplatte (3) einem Viertel der Ultraschallwellenlänge in der Klebeschicht (5) bei der vorbestimmten Ultraschallfrequenz entspricht.

2. Ultraschalldurchflußmeßgerät nach Anspruch 1, **dadurch gekennzeichnet, dass** die Oberseite und die Unterseite der Zwischenplatte (3) parallel zueinander verlaufen.

3. Ultraschalldurchflußmeßgerät nach Anspruch 1 oder 2, **dadurch gekennzeichnet, dass** die Zwischenplatte (3) zumindest auf der dem Piezo-Element (4) zugewandten Seite, vorzugsweise vollständig, metallisch ist.

4. Ultraschalldurchflußmeßgerät nach einem der Ansprüche 1 bis 3, **dadurch gekennzeichnet, dass** das Piezo-Element (4) auf seiner der Zwischenplatte (3) gegenüberliegenden Seite als elektrischen Anschluß eine auf dem Piezo-Element (4) anliegende Anschlußfeder (11) aufweist.

5. Ultraschalldurchflußmeßgerät nach einem der Ansprüche 1 bis 4, **dadurch gekennzeichnet, dass** das Anschlußelement (1) Positionierungseinrichtungen (2) für das Piezo-Element (4) aufweist.

6. Ultraschalldurchflußmeßgerät nach einem der Ansprüche 1 bis 5, **dadurch gekennzeichnet, dass** als Anschlußelement (1) ein, vorzugsweise aus Kunststoff gefertigter, Keil vorhanden ist.

## Claims

1. Ultrasonic flowmeter, in particular a clamp-on ultrasonic flowmeter for measuring the flow through a line through which medium flows, having at least one ultrasonic transducer (8) with a piezo element (4), wherein a connecting element (1) for attachment of the ultrasonic transducer (8) to the line is present, and the piezo element (4) is attached to the connecting element (1), and an intermediate plate (3) is present between the piezo element (4) and the connecting element (1), wherein the piezo element (4) is attached to the connecting element (1) by means of the intermediate plate (3), wherein the intermediate plate (3) is used as an electrical connection for the piezo element (4),
**characterized in**
**that** the intermediate plate (3) has at least one recess in which an adhesive layer (5) is present for attachment of the piezo element (4) to the connecting element (1), that the thickness of the adhesive layer (5) corresponds to the thickness of the intermediate plate (3), that the transducer (8) is operated at a pre-determined ultrasonic frequency, and that the thickness of the intermediate plate (3) corresponds to a quarter of the ultrasonic wavelength in the adhesive layer (5) at the pre-determined ultrasonic frequency.

2. Ultrasonic flowmeter according to claim 1, **characterized in that** the upper side and the lower side of the intermediate plate (3) run parallel to one another.

3. Ultrasonic flowmeter according to claim 1 or 2, **characterized in that** the intermediate plate (3) is metallic at least on the side facing the piezo element (4), preferably is completely metallic.

4. Ultrasonic flowmeter according to any one of claims 1 to 3, **characterized in that** the piezo element (4) has a terminal spring (11) resting on the piezo element (4) on its side opposite the intermediate plate (3) forming an electrical connection.

5. Ultrasonic flowmeter according to any one of claims 1 to 4, **characterized in that** the connecting element (1) has positioning formations (2) for the piezo element (4).

6. Ultrasonic flowmeter according to any one of claims 1 to 5, **characterized in that** the connecting element (1) is provided as a wedge, preferably made of plastic.

## Revendications

1. Appareil de mesure de débit par ultrasons, en particulier appareil de mesure de débit par ultrasons à fixer par serrage, pour la mesure du débit dans un conduit traversé par un fluide, comprenant au moins un convertisseur (8) d'ultrasons présentant un piézoélément (4), un élément de raccordement (1) étant prévu pour placer le convertisseur (8) d'ultrasons sur le conduit et le piézoélément (4) étant fixé sur l'élément de raccordement (1) et une plaque intermédiaire (3) étant prévue entre le piézoélément (4) et l'élément de raccordement (1) le piézoélement (4) étant fixé sur l'élément de raccordement (1) au moyen de la plaque intermédiaire (3), la plaque intermédiaire (3) servant de raccordement électrique pour le piézoélément (4),
**caractérisé en ce que**
la plaque intermédiaire (3) présente au moins une découpe dans laquelle une couche (5) d'agent adhésif est prévue pour fixer le piézoélément (4) sur l'élément de raccordement (1), **en ce que** l'épaisseur de la couche (5) d'agent adhésif correspond à l'épaisseur de la plaque intermédiaire (3), **en ce que** le convertisseur de mesure (8) fonctionne à une fréquence ultrasonique prédéfinie et **en ce que** l'épaisseur de la plaque intermédiaire (3) correspond au quart de la longueur d'onde des ultrasons dans la couche adhésive (5) à la fréquence prédéfinie des ultrasons.

2. Appareil de mesure de débit par ultrasons selon la revendication 1, **caractérisé en ce que** le côté supérieur et le côté inférieur de la plaque intermédiaire (3) s'étendent parallèlement l'un à l'autre.

3. Appareil de mesure de débit par ultrasons selon les revendications 1 ou 2, **caractérisé en ce que** la plaque intermédiaire (3) est de préférence complètement métallique au moins sur son côté tourné vers le piézoélément (4).

4. Appareil de mesure de débit par ultrasons selon l'une des revendications 1 à 3, **caractérisé en ce que** le piézoélément (4) présente sur son côté opposé à la plaque intermédiaire (3) et comme raccordement électrique un ressort de raccordement (11) qui repose sur le piézoélément (4).

5. Appareil de mesure de débit par ultrasons selon l'une des revendications 1 à 4, **caractérisé en ce que** l'élément de raccordement (1) présente des dispositifs de positionnement (2) pour le piézoélément (4).

6. Appareil de mesure de débit par ultrasons selon l'une des revendications 1 à 5, **caractérisé en ce qu'**un biseau, de préférence réalisé en matière synthétique, est prévu comme élément de raccordement (1).
